# EUROPEAN PATENT APPLICATION

(11) **EP 1 464 379 A1**
(43) Date of publication of application: **06.10.2004**
(21) Application number: 04008094.7
(22) Date of filing: 02.04.2004
(51) Int. Cl.: B01D 63/10, B01D 69/10

(54) **Spiral wound separation membrane element**

(30) Priority: 03.04.2003 JP 2003099954
(71) Applicant: NITTO DENKO CORPORATION, Osaka (JP)
(72) Inventor: Hirokawa, Mitsuaki, Ibaraki-shi, Osaka (JP); Ando, Masaaki, Ibaraki-shi, Osaka (JP); Chikura, Shinichi, Ibaraki-shi, Osaka (JP); Ishihara, Satoru, Ibaraki-shi, Osaka (JP)
(74) Representative: Grünecker, Kinkeldey, Stockmair & Schwanhäusser Anwaltssozietät

(57) **Abstract**

A spiral separation membrane element effective in reducing the pressure loss around core tube perforated parts, which is problematic especially in low-pressure operations. The spiral separation membrane element comprises a perforated cored tube 5 and, spirally wound therearound, separation membranes 1, feed-side passage materials 2, and permeation-side passage materials 4, the separation membranes 1 and the passage materials 2 and 4 being wound around the cored tube 5 so that the feed-side passage materials 2 and the permeation-side passage materials 4 are disposed respectively on the feed side and permeation side of the separation membranes 1 and that a permeation-side passage material 10 which is the same as or different from the permeation-side passage materials 4 is interposed at the periphery of the perforated cored tube 5, wherein the effective perforated-part area as calculated by multiplying the total area of the perforated parts in the core tube 5 by the percentage of openings of one layer of the permeation-side passage material surrounding the core tube 5 is at least 1.0 time the inner cross-sectional area of the core tube 5.

## Description

### FIELD OF THE INVENTION

The present invention relates to a spiral separation membrane element for separating ingredients suspended or dissolved in liquids. More particularly, the invention relates to a spiral separation membrane element effective in membrane separation conducted at low pressure, such as ultralow-pressure reverse osmosis filtration, ultrafiltration, or microfiltration.

### DESCRIPTION OF THE RELATED ART

Spiral separation membrane elements have generally had a structure obtained by spirally winding one or more membrane leaves each comprising a separation membrane and a permeation-side passage material or feed-side passage material disposed thereon around a perforated cored tube while interposing a feed-side passage material or permeation-side passage material. There is a technique in which when membrane leaves are to be wound, a permeation-side passage material which is the same as or different from the permeation-side passage materials of the membrane leaves is wound around a cored tube before the membrane leaves are wound around the cored tube. The permeated liquid which has passed through each membrane leaf hence passes through the permeation-side passage material surrounding the cored tube and then flows more easily into perforated parts in the cored tube (see, for example, U. S. Patent 5,681,467).

In designing such a spiral separation membrane element, the inner diameter of the core tube has been determined first according to the rate of flow of the permeated liquid through the core tube serving as a water-collecting tube, because the pressure loss for the flow in the tube is governed by the relationship between the flow rate or the like in the tube and the inner diameter of the tube. Subsequently, the total area of perforated parts in the perforated core tube is determined. However, it has been thought that the appropriate range of the total perforated-part area is about 2-4 times the cross-sectional area of the core tube while taking account of the inner diameter of the core tube, the size of the perforations, etc.

However, in the structure in which a permeation-side passage material is wound around perforated parts, the substantial area of the perforated parts has been far smaller then the supposed area because the percentage of openings of one layer of the permeation-side passage material is as low as about 20%. Namely, even when only one layer of a permeation-side passage material has been wound around the core tube, the substantial area of perforated parts is less than one time the inner cross-sectional area of the core tube and this has constituted resistance on the permeation side.

Although the small substantial area of perforated parts in the core tube has resulted in an increased pressure loss around the perforated parts, the pressure loss in passage through the permeation-side passage material as described above has not been so problematic, because the conventional spiral separation membrane element is operated at a high pressure (differential pressure: 0.5 MPa or higher) or the permeated water flow rate is low.

However, with the recent trends toward reduction in operating pressure and increase in permeated water flow rate, that pressure loss is coming to be not negligible. Especially in ultralow-pressure RO (reverse osmosis) membranes, which are operated at a low pressure, and in spiral separation membrane elements for clarification, influences of the pressure loss pose a serious problem.

On the other hand, when a permeation-side passage material is wound around a cored tube so as to make about one lap and the permeation-side passage material used is one having a high percentage of openings, then it is theoretically possible to diminish the decrease in the effective area of perforated parts in some degree. Virtually, however, to increase the percentage of openings of a permeation-side passage material arouses a problem that the permeation-side passage material cannot retain its shape when wound around a core tube. There are hence limitations on increasing the percentage of openings. Furthermore, when a permeation-side passage material is wound so as to make about one lap, the area of the passage through which the permeated liquid from each membrane leaf flows along the permeation-side passage material surrounding the cored tube is small, resulting in an increased loss in this part. This technique also is hence impractical for low-pressure operations.

### SUMMARY OF THE INVENTION

Accordingly, an object of the present invention is to provide a spiral separation membrane element effective in reducing the pressure loss around core tube perforated parts which is problematic especially in low pressure operations.

In order to accomplish that object, the present inventors made intensive investigations on influences of the percentage of openings of permeation-side passage materials, number of laps thereof, diameter of the perforations of core tubes, etc. on the pressure loss around the perforated parts of the core tubes. As a result, it has been found that as the number of laps increases beyond a certain degree, the influence thereof on pressure loss becomes negligible. It has been further found that even when a permeation-side passage material is wound so as to make two or more laps, the percentage of openings of one layer of the passage material exerts considerable influence, and that when the product of this percentage and the total area of perforated parts becomes a value which is not lower than a certain proportion to the inner cross-sectional area of the core tube, then the pressure loss around the perforated parts approaches its lower limit. The present invention has been completed based on these findings.

The present invention provides a spiral separation membrane element comprising a perforated cored tube and, spirally wound therearound, one or more separation membranes, one or more feed-side passage materials, and one or more permeation-side passage materials, the separation membranes and the passage materials being wound around the cored tube so that the feed-side passage materials and the permeation-side passage materials are disposed respectively on the feed side and permeation side of the separation membranes and that a permeation-side passage material which is the same as or different from the permeation-side passage materials is interposed at the periphery of the perforated cored tube, wherein the effective perforated-part area as calculated by multiplying the total area of the perforated parts in the core tube by the percentage of openings of one layer of the permeation-side passage material surrounding the core tube is at least 1.0 time the inner cross-sectional area of the core tube.

According to the present invention, since the effective perforated-part area is at least 1.0 time the cross-sectional area of the core tube, the pressure loss around the perforated parts is close to its lower limit even when the number of laps of the permeation-side passage material is 2 or larger. Because of this, the pressure loss around core tube perforated parts which is problematic especially in low pressure operations can be diminished.

In the separation membrane element described above, the permeation-side passage material interposed at the periphery of the core tube has preferably been wound so as to make substantially 2-15 laps. In this constitution, not only the passage through which the permeant liquid from each membrane leaf flows along the permeation-side passage material surrounding the cored tube has a moderately large area, but also the decrease in membrane area which is caused by too large a number of laps can be diminished. In addition, the effect of diminishing the pressure loss around core tube perforated parts, which is produced by the invention, can be sufficiently obtained.

The separation membranes preferably are ultralow-pressure reverse osmosis membranes, ultrafiltration membranes, or microfiltration membranes. Since such separation membranes are operated at low pressure, they have encountered the problem of pressure loss around core tube perforated parts as stated above. However, the present invention, which produces the effect described above, is especially effective for such separation membranes.

### BRIEF DESCRIPTION OF THE DRAWINGS

Fig. 1 is views showing a winding step for producing one embodiment of the spiral separation membrane element of the present invention.
Fig. 2 is a graphic presentation showing the relationship between the number of laps of a permeation-side passage material and pressure loss in Test Example 1.
Fig. 3 is a graphic presentation showing the relationship between the effective perforated-part area/core tube inner cross-sectional area ratio and pressure loss in Test Example 2.
Fig. 4 is a graphic presentation showing differences in pressure loss between Example 1 and Comparative Example 1.

In the drawings:
- 1: membrane
- 2: feed-side passage material
- 4: permeation-side passage material
- 5: cored tube
- 10: permeation-side passage material

### DETAILED DESCRIPTION OF THE INVENTION

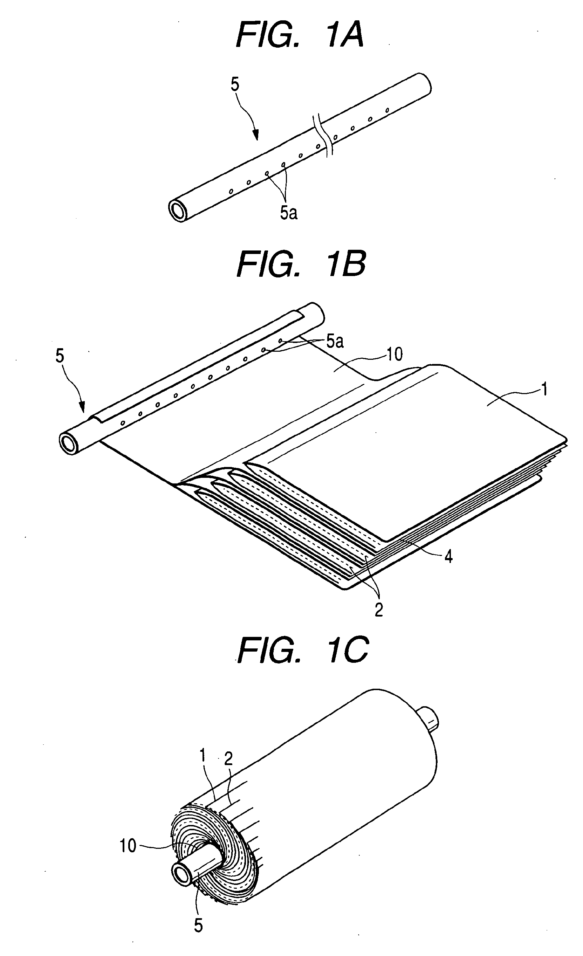

Embodiments of the present invention are described below by reference to the accompanying drawings. Figs. 1A-1C are views showing a winding step for producing one embodiment of the spiral separation membrane element of the present invention.

As shown in Fig. 1C, the spiral separation membrane element of the present invention has a structure comprising a perforated cored tube 5 and, spirally wound therearound, separation membranes 1, feed-side passage materials 2, and permeation-side passage materials 4. In winding, the feed-side passage materials 2 and the permeation-side passage materials 4 are disposed respectively on the feed side and permeation side of the separation membranes 1 as shown in Figs. 1B and 1C. Furthermore, a permeation-side passage material 10 which is the same as or different from the permeation-side passage materials 4 is wound first on the perforated cored tube 5 so as to be interposed at the periphery of the cored tube 5.

The embodiment shown in Fig. 1 has a structure obtained by a method in which separation membranes 1 which each have been folded in two and have a feed-side passage material 2 interposed therebetween are superposed on a permeation-side passage material 10 alternately with permeation-side passage materials 4 and the resultant assemblage is wound around a cored tube 5. The side edges of each folded separation membrane 1 where a permeation-side passage material 4 is sandwiched and the innermost-side edge of the separation membrane 1 are sealed at any stage in such a series of steps. Thus, the feed-side passage and the permeation-side passage have been connected to each other not directly but through the separation membranes 1.

The structure of the separation membrane element of the present invention should not be construed as being limited to that shown in Fig. 1. A continuous membrane may be used in place of the separation membranes 1. One of the permeation-side passage materials 4 may have a prolonged length so as to serve as a permeation-side passage material 10 for winding. Furthermore, the sealing structure of each part may be any structure as long as the feed-side passage is prevented from being directly connected to the permeation-side passage.

In the case where a continuous membrane is used, this membrane is, for example, one which has been processed in the following manner. The separation membrane 1 is pleated, and feed-side passage materials 2 and permeation-side passage materials 4 are alternately inserted between opposed parts of the separation membrane 1. These permeation-side passage materials 4 are fixed to another permeation-side passage material 10 in the form of the teeth of a comb.

The permeation-side passage materials 4 disposed on the permeation side of the separation membranes 1 function as a spacer for the separation membranes 1 to secure passages for the permeated liquid which has passed through the separation membranes 1. These permeation-side passage materials 4 can be any of the known permeation-side passage materials used in spiral membrane elements, such as nets, meshes, woven filaments, woven fabrics, nonwoven fabrics, grooved sheets, and corrugated sheets. The material of the permeation-side passage materials 4 may be any of resins such as polypropylene, polyethylene, poly(ethylene terephthalate) (PET), polyamides, epoxies, and urethanes, natural polymers, rubbers, metals, and the like. However, in the case where dissolution from the passage materials in, e.g., a separation operation may pose a problem, it is preferred to take account of the dissolution in selecting a material.

The thickness of the permeation-side passage materials 4 is preferably 0.1-2 mm. The thickness-direction porosity of the permeation-side passage materials 4 is preferably 10-80%. In the case where the permeation-side passage materials 4 are in a net form, the pitch thereof is preferably 0.3-3 mm.

The permeation-side passage material 10 surrounding the core tube 5 functions to secure the passage through which the permeated liquid from each membrane leaf flows along the permeation-side passage material 10 surrounding the core tube 5 and to enable the permeated liquid to flow into perforations 5a in the core tube 5 through openings of the permeation-side passage material 10. Consequently, the permeation-side passage material 10 to be used can be the same as or different from the permeation-side passage materials 4.

Specifically, any of the permeation-side passage materials 4 which have a percentage of openings, as measured with respect to one layer, of 20-50% can be used. The percentage of openings thereof is preferably 30-40%. The percentage of openings of a permeation-side passage material 10 means the proportion of the projected area of the openings thereof to the projected area of the permeation-side passage material 10. Consequently, the permeation-side passage material 10 is preferably in the form of a net, mesh, woven filament, or the like. In the case where the permeation-side passage materials 4 are to be fixed to the permeation-side passage material 10 by thermal fusion bonding or ultrasonic fusion bonding, it is preferred that the passage materials 4 and the passage material 10 be selected so as to be made of the same material or of materials fusion-bondable to each other.

The number of laps of the permeation-side passage material 10 interposed at the periphery of the core tube 5 preferably is substantially 2-15, and more preferably is substantially 3-10. In case where the number of laps thereof is less than 2, the passage through which the permeated liquid from each membrane leaf flows along the permeation-side passage material 10 surrounding the cored tube 5 tends to have too high resistance.

Examples of the material of the perforated cored tube 5 include metals, fiber-reinforced plastics, plastics, and ceramics. The outer diameter and length of the cored tube 5 are suitably determined according to the size of the spiral membrane element. For example, the diameter and length thereof are 10-100 mm and 500-2,000 mm, respectively. Preferably, the diameter and length thereof are 12-50 mm and 900-1,200 mm, respectively.

In the present invention, the effective perforated-part area as calculated by multiplying the total area of the perforated parts in the core tube 5 by the percentage of openings of one layer of the permeation-side passage material 10 surrounding the core tube 5 is regulated to at least 1.0 time the inner cross-sectional area of the core tube 5. From the standpoint of diminishing the pressure loss around the perforated parts in the core tube with higher certainty, the effective perforated-part area is preferably 2.0-5.0 times the inner cross-sectional area of the core tube 5. For use in applications where back washing is conducted, the effective perforated-part area is especially preferably 2.0 times or more because the water flow rate increases to 1.5-2.0 times the ordinary flow rate in filtration.

Consequently, the size, number, etc. of perforations in the cored tube 5 are determined from the relationship with the percentage of openings of the permeation-side passage material 10 and with the inner cross-sectional area so as to satisfy the requirement described above. The arrangement and shape of the perforations in the cored tube 5 may be the same as in conventional techniques.

The feed-side passage materials 2 can be any of known feed-side passage materials used in spiral membrane elements, such as nets, meshes, woven filaments, woven fabrics, nonwoven fabrics, grooved sheets, and corrugated sheets. The material of the feed-side passage materials 2 may be any of resins such as polypropylene, polyethylene, poly(ethylene terephthalate) (PET), and polyamides, natural polymers, rubbers, metals, and the like.

The separation membranes 1 preferably are ultralow-pressure reverse osmosis membranes, ultrafiltration membranes, or microfiltration membranes, which are generally operated at a low pressure. The present invention is especially effective in applications where the operating pressure is lower than 0.5 MPa. For example, ultrafiltration membranes or microfiltration membranes can be advantageously used in the spiral separation membrane element for clarification.

The present invention is described in more detail by reference to the following Examples, but it should be understood that the invention is not construed as being limited thereto.

### TEST EXAMPLE 1

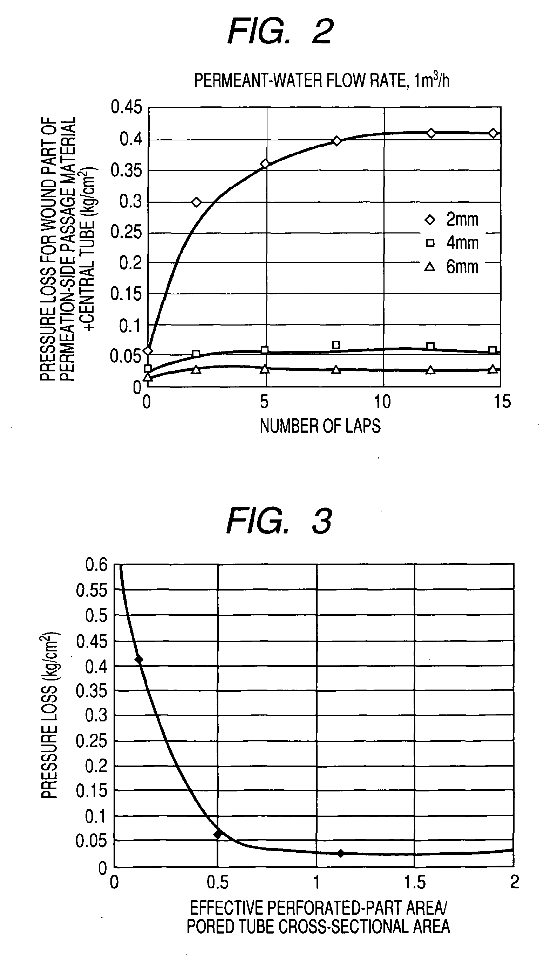

First, the relationship between the number of laps of a permeation-side passage material to be wound around a core tube and the pressure loss (including the pressure loss caused by the core tube itself) was examined. The perforated core tube had an outer diameter of 22 mm, inner diameter of 16 mm, perforation diameter of 2, 4 or 6 mm, and perforation number of 40. A polyester net having a percentage of openings of 20% and a passage material thickness of 0.29 mm was wound around the core tube to make 0-12 laps. This core tube was set in a vessel to be used in a spiral separation membrane element, and the pressure difference (pressure loss) between the outlet of the core tube in the vessel and the inlet tube was measured at a permeated water flow rate of 1 m³/hr. The results obtained are shown in Fig. 2.

It was found from the results shown in Fig. 2 that the pressure loss changes little with the number of laps when the permeation-side passage material has been wound to make 2 or more laps.

### TEST EXAMPLE 2

The relationship between the effective perforated-part area/core tube inner cross-sectional area ratio and the pressure loss (including the pressure loss caused by the core tube itself) was examined. The perforated core tube had an outer diameter of 22 mm, inner diameter of 16 mm, perforation diameter of 2, 4 or 6 mm, and perforation number of 40. A polyester net having a percentage of openings of 20% and a passage material thickness of 0.29 mm was wound around the core tube to make 12 laps. This core tube was set in a vessel to be used in a spiral separation membrane element, and the pressure difference (pressure loss) between the outlet of the core tube in the vessel and the inlet tube was measured at a permeated water flow rate of 1 m³/hr. The results obtained are shown in Fig. 3.

It was found from the results given in Fig. 3 that when the effective perforated-part area/core tube inner cross-sectional area ratio is 1.0 or higher, the pressure loss changes little and the pressure loss around the perforated parts approaches its lower limit.

### EXAMPLE 1

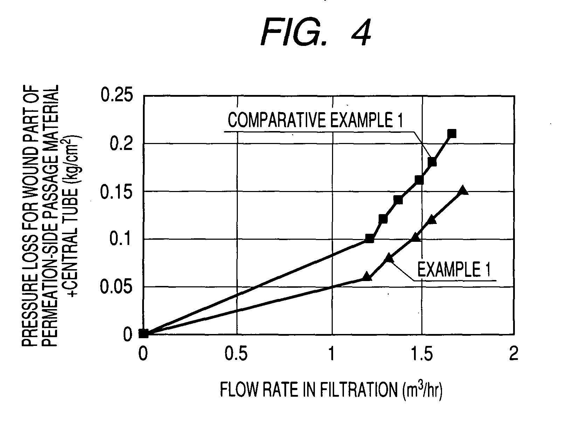

A perforated core tube was used which had an outer diameter of 22 mm, inner diameter of 16 mm, perforation diameter of 6 mm, and perforation number of 40. A polyester net having a percentage of openings of 20% and a passage material thickness of 0.29 mm was wound around the core tube to make 8 laps. (The effective perforated-part area was 1.1 times the inner cross-sectional area of the core tube.) This core tube was set in a vessel to be used in a spiral separation membrane element, and the pressure difference (pressure loss) between the outlet of the core tube in the vessel and the inlet tube was measured while changing the permeated water flow rate. The results obtained are shown in Fig. 4.

### COMPARATIVE EXAMPLE 1

A perforated core tube was used which had an outer diameter of 22 mm, inner diameter of 16 mm, perforation diameter of 4 mm, and perforation number of 40. A polyester net having a percentage of openings of 20% and a passage material thickness of 0.29 mm was wound around the core tube to make 8 laps. (The effective perforated-part area was 0.5 times the inner cross-sectional area of the core tube.) This core tube was set in a vessel to be used in a spiral separation membrane element, and the pressure difference (pressure loss) between the outlet of the core tube in the vessel and the inlet tube was measured while changing the permeated water flow rate. The results obtained are shown in Fig. 4.

It was found from a comparison between Example 1 and Comparative Example 1 that the present invention is effective in diminishing the pressure loss around core tube perforated parts, which is problematic especially in low-pressure operations. It should further be apparent to those skilled in the art that various changes in form and detail of the invention as shown and described above may be made. It is intended that such changes be included within the spirit and scope of the claims appended hereto.

This application is based on Japanese Patent Application No. 2003-099954 filed April 4, 2003, the disclosure of which is incorporated herein by reference in its entirety.

## Claims

1. A spiral separation membrane element comprising a perforated cored tube and, spirally wound therearound, one or more separation membranes, one or more feed-side passage materials, and one or more permeation-side passage materials, the separation membranes and the passage materials being wound around the cored tube so that the feed-side passage materials and the permeation-side passage materials are disposed respectively on the feed side and permeation side of the separation membranes and that a permeation-side passage material which is the same as or different from the permeation-side passage materials is interposed at the periphery of the perforated cored tube,
wherein the effective perforated-part area as calculated by multiplying the total area of the perforated parts in the core tube by the percentage of openings of one layer of the permeation-side passage material surrounding the core tube is at least 1.0 time the inner cross-sectional area of the core tube.

2. The spiral separation membrane element as claimed in claim 1, wherein the permeation-side passage material interposed at the periphery of the core tube is wound so as to make substantially 2-15 laps.

3. The spiral separation membrane element as claimed in claim 1 or 2, wherein the separation membranes are ultralow-pressure reverse osmosis membranes, ultrafiltration membranes, or microfiltration membranes.
